(19) Europäisches Patentamt
European Patent Office
Office européen des brevets

(11) **EP 1 986 440 A1**

(12) **EUROPEAN PATENT APPLICATION**
published in accordance with Art. 158(3) EPC

(43) Date of publication:
**29.10.2008 Bulletin 2008/44**

(51) Int Cl.:
**H04N 7/30** (2006.01)

(21) Application number: **06812053.4**

(22) Date of filing: **19.10.2006**

(86) International application number:
**PCT/JP2006/320875**

(87) International publication number:
**WO 2007/094100 (23.08.2007 Gazette 2007/34)**

(84) Designated Contracting States:
**AT BE BG CH CY CZ DE DK EE ES FI FR GB GR HU IE IS IT LI LT LU LV MC NL PL PT RO SE SI SK TR**

(30) Priority: **13.02.2006 JP 2006035319**

(71) Applicant: **Kabushiki Kaisha Toshiba**
**Tokyo 105-8001 (JP)**

(72) Inventors:
• **TANIZAWA, Akiyuki**
**c/o Intellectual Property Division**
**Toshiba Corporation**
**Tokyo 105-8001 (JP)**

• **CHUJOH, Takeshi**
**c/o Intellectual Property Division**
**Toshiba Corporation**
**Tokyo 105-8001 (JP)**

(74) Representative: **Maury, Richard Philip**
**Marks & Clerk**
**90 Long Acre**
**London**
**WC2E 9RA (GB)**

(54) **MOVING IMAGE ENCODING/DECODING METHOD AND DEVICE AND PROGRAM**

(57)     A video encoding method of performing dequantization of a transform coefficient using a quantization matrix of the transform coefficient corresponding to each frequency position includes a quantization matrix generation step of generating a quantization matrix using a generation function used for generation of the quantization matrix and a generation parameter, a quantization step of quantizing the transform coefficient, using the quantization matrix generated, and a step of encoding the quantized transform coefficient to generate a code signal.

FIG.1

**Description**

Technical Field

The present invention relates to a video encoding/decoding method and apparatus using quantization matrices.

Background Art

There is proposed a system to quantize a DCT coefficient by doing bit allocation every frequency position, using a frequency characteristic of DCT coefficients provided by subjecting a video to orthogonal transformation, for example, discrete cosine transform (DCT) (W. H. Chen and C. H. Smith, "Adaptive Coding of Monochrome and Color Images", IEEE Trans. On Comm. Vol.25, No.11 Nov. 1977). According to this conventional system, many bits are allocated to a low level frequency domain to obtain coefficient information, whereas few bits are allocated to a high pass frequency domain, whereby the DCT coefficient is quantized in efficiency. However, this conventional system needs to prepare an allocation table according to coarseness of quantization. Therefore, it is not always an effective system in terms of robust quantization.

ITU-TT.81 and ISO/IEC10918-1 (referred to JPEG: Joint Photographic Experts Group hereinafter) urged in ITU-T and ISO/IEC quantize equally transformation coefficients over the entire frequency range with the same quantization scale. However, the human is comparatively insensitive on the high frequency region according to human visual property. For this reason, the following system is proposed. That is, in JPEG, weighting is done every frequency domain to change a quantization scale, so that many bits are assigned to a low frequency domain sensitive visually and the bit rate is decreased in the high frequency domain, resulting in improving a subjectivity picture quality. This system performs quantization every conversion quantization block. A table used for this quantization is referred to as a quantization matrix.

Further in recent years the video encoding method that largely improves the encoding efficiency than the conventional method is urged as ITU-TRec.H.264 and ISO/IEC14496-10 (referred to as H.264) in combination with ITU-T and ISO/IEC. The conventional encoding systems such as ISO/IECMPEG-1, 2, 4, and ITU-TH.261, H.263 quantize DCT coefficients after orthogonal transform to reduce the number of encoded bits of the transform coefficients. In a H. 264 main profile, since the relation between a quantization parameter and a quantization scale is so designed that they become at an equal interval on a log scale, the quantization matrix is not introduced. However, in a H.264 high profile, the quantization matrix is to be newly introduced to improve a subjectivity image quality for a high-resolution image (refer to Jiuhuai Lu, "Proposal of quantization weighting for H.264/MPEG-4 AVC Professional Profiles", JVT of ISO/IEC MPEG & ITU-T VCEG, JVT-K029, March, 2004).

In the H.264 high profile, total eight kinds of different quantization matrixes can be established in correspondence with two transformed/quantized blocks (a 4x4 pixel block and a 8x8 pixel block) for every encoding mode (intra-frame prediction or inter-frame prediction) and for every signal (a luminance signal or color-difference signal).

Since the quantization matrix is employed for weighting the pixel according to each frequency component position at the time of quantization, the same quantization matrix is necessary at the time of dequantization too. In an encoder of the H.264 high profile, the used quantization matrixes are encoded and multiplexed and then transmitted to a decoder. Concretely, a difference value is calculated in order of zigzag scan or field scan from a DC component of the quantization matrix, and the obtained difference data is subjected to variable length encoding and multiplexed as code data.

On the other hand, a decoder of the H.264 high profile decodes the code data according to a logic similar to the encoder to reconstruct it as a quantization matrix to be used at the time of dequantization. The quantization matrix is finally subjected to variable length encoding. In this case, the number of encoded bits of the quantization matrix requires 8 bits at minimum and not less than 1500 bits at maximum on syntax.

A method for transmitting a quantization matrix of H.264 high profile may increase an overhead for encoding the quantization matrix and thus largely decrease the encoding efficiency, in an application used at a low bit rate such as cellular phone or mobile device.

A method for adjusting a value of a quantization matrix by transmitting a base quantization matrix at first to update the quantization matrix with a small overhead and then transmitting a coefficient k indicating a degree of change from the quantization matrix to a decoder is proposed (refer to JP-A 2003-189308(KOKAI)).

JP-A 2003-189308(KOKAI): "Video encoding apparatus, encoding method, decoding apparatus and decoding method, and video code string transmitting method" aims to update a quantization matrix every picture type with the small number of encoded bits, and makes it possible to update the base quantization matrix at about 8 bits at most. However, since it is a system for sending only a degree of change from the base quantization matrix, the amplitude of the quantization matrix can be changed but it is impossible to change its characteristic. Further, it needs to transmit the base quantization matrix, and thus the number of encoded bits may largely increase due to the situation of encoding.

Disclosure of Invention

When a quantization matrix is encoded by a method prescribed by the H.264 high profile, and transmitted to a decoder, the number of encoded bits for encoding the quantization matrix increases. When the quantization matrix is transmitted every picture again, the number of encoded bits for encoding the quantization matrix increases further. Further, when a degree of change of the quantization matrix is transmitted, degrees of freedom for changing the quantization matrix are largely limited. There is a problem that these results make it difficult to utilize the quantization matrix effectively.

An aspect of the present invention provides a video encoding method comprising: generating a quantization matrix using a function concerning generation of the quantization matrix and a parameter relative to the function; quantizing a transform coefficient concerning an input image signal using the quantization matrix to generate a quantized transform coefficient; and encoding the parameter and the quantized transform coefficient to generate a code signal.

Brief Description of Drawings

FIG. 1 is a block diagram illustrating a structure of a video encoding apparatus according to a first embodiment.
FIG. 2 is a block diagram illustrating a structure of a quantization matrix generator according to the first embodiment.
FIG. 3 is a flow chart of the video encoding apparatus according to the first embodiment.
FIG. 4A is a schematic diagram of a prediction order/block shape related to the first embodiment.
FIG. 4B is a diagram illustrating a block shape of 16x16 pixels.
FIG. 4C is a diagram illustrating a block shape of 4x4 pixels.
FIG. 4D is a diagram illustrating a block shape of 8x8 pixels.
FIG. 5A is a diagram illustrating a quantization matrix corresponding to a 4x4 pixel block related to the first embodiment.
FIG. 5B is a diagram illustrating a quantization matrix corresponding to a 8x8 pixel block.
FIG. 6A is a diagram for explaining a quantization matrix generation method related to the first embodiment.
FIG. 6B is a diagram for explaining another quantization matrix generation method.
FIG. 6C is a diagram for explaining another quantization matrix generation method.
FIG. 7 is a schematic diagram of a syntax structure according to the first embodiment.
FIG. 8 is a diagram of a data structure of a sequence parameter set syntax according to the first embodiment.
FIG. 9 is a diagram of a data structure of a picture parameter set syntax according to the first embodiment.
FIG. 10 is a diagram of a data structure of a picture parameter set syntax according to the first embodiment.
FIG. 11 is a diagram of a data structure of a supplement mental syntax according to the first embodiment.
FIG. 12 is a flow chart of multipath encoding according to a second embodiment.
FIG. 13 is a diagram illustrating a syntax structure in a slice header syntax.
FIG. 14 is a diagram illustrating a slice header syntax.
FIG. 15 is a diagram illustrating a slice header syntax.
FIG. 16 is a diagram illustrating an example of a CurrSliceType.
FIG. 17 is a diagram illustrating a slice header syntax.
FIG. 18 is a block diagram illustrating a structure of a video decoding apparatus according to the third embodiment of the present invention.
FIG. 19 is a flow chart of the video decoding apparatus according to the third embodiment of the present invention.

Best Mode for Carrying Out the Invention

There will now be described embodiments of the present invention in detail in conjunction with drawings.

(First embodiment: encoding)

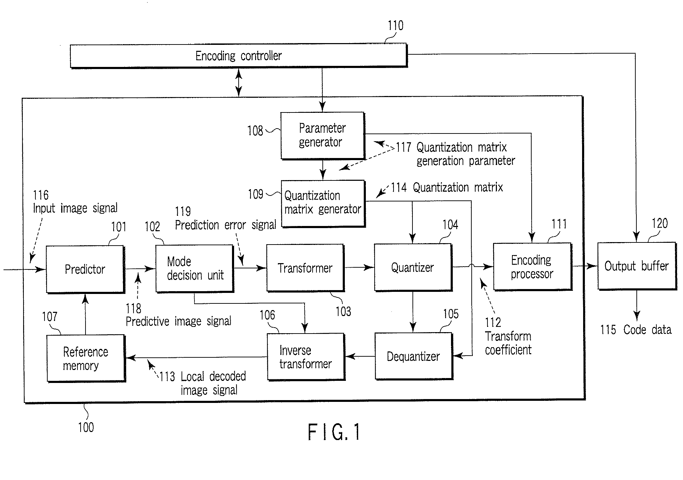

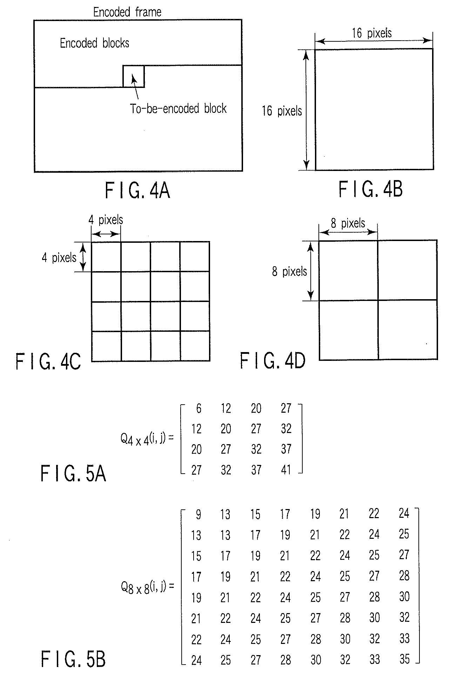

According to the first embodiment shown in FIG. 1, a video signal is divided into a plurality of pixel blocks and input to a video encoding apparatus 100 as an input image signal 116. The video encoding apparatus 100 has, as modes executed by a predictor 101, a plurality of prediction modes different in block size or in predictive signal generation method. In the present embodiment it is assumed that encoding is done from the upper left of the frame to the lower-right thereof as shown in FIG. 4A.

The input image signal 116 input to the video encoding apparatus 100 is divided into a plurality of blocks each containing 16x16 pixels as shown in FIG. 4B. A part of the input image signal 116 is input to the predictor 101 and encoded by an encoder 111 through a mode determination unit 102, a transformer 103 and a quantizer 104. This encoded image signal is stored in an output buffer 120 and then is output as coded data 115 in the output timing controlled by an encoding controller 110.

A 16x16 pixel block shown in FIG. 4B is referred to as a macroblock and has a basic process block size for the following encoding process. The video encoding apparatus 100 reads the input image signal 116 in units of block and encodes it. The macroblock may be in units of 32x32 pixel block or in units of 8x8 pixel block.

The predictor 101 generates a predictive image signal 118 with all modes selectable in the macroblock by using an encoded reference image stored in a reference image memory 107. The predictor 101 generates all predictive image signals for all encoding modes in which an object pixel block can be encoded. However, when the next prediction cannot be done without generating a local decoded image in the macroblock like the intra-frame prediction of H.264 (4x4 pixel prediction (FIG. 4C) or 8x8 pixel prediction (FIG. 4D), the predictor 101 may perform orthogonal transformation and quantization, and dequantization and inverse transformation.

The predictive image signal 118 generated with the predictor 101 is input to a mode determination unit 102 along with the input image signal 116. The mode determination unit 102 inputs the predictive image signal 118 to an inverse transformer 106, generates a predictive error signal 119 by subtracting the predictive image signal 118 from the input image signal 116, and input it to the transformer 103. At the same time, the mode determination unit 102 determines a mode based on mode information predicted with the predictor 101 and the predictive error signal 119. Explaining it more to be concrete, the mode is determined using a cost k shown by the following equation (1) in this embodiment.

$$K = SAD + \lambda \times OH \qquad\qquad (1)$$

where OH indicates mode information, SAD is the absolute sum of predictive error signals, and $\lambda$ is a constant. The constant $\lambda$ is determined based on a value of a quantization width or a quantization parameter. In this way, the mode is determined based on the cost K. The mode in which the cost K indicates the smallest value is selected as an optimum mode.

In this embodiment, the absolute sum of the mode information and the predictive error signal is used. As another embodiment, the mode may be determined by using only mode information or only the absolute sum of the predictive error signal. Alternatively, Hadamard transformation may be subjected to these parameters to obtain and use an approximate value. Further, the cost may be calculated using an activity of an input image signal, and a cost function may be calculated using a quantization width and a quantization parameter.

A provisional encoder is prepared according to another embodiment for calculating the cost. A predictive error signal is generated based on the encoding mode of the provisional encoder. The predictive error signal is really encoded to produce code data. Local decoded image data 113 is produced by local-decoding the code data. The mode may be determined using the number of encoded bits of the code data and a square error of the local decoded picture signal 113 and the input video signal 116. A mode determination equation of this case is expressed by the following equation (2).

$$J = D + \lambda \times R \quad (2)$$

where J indicates a cost, D indicates an encoding distortion representing a square error of the input video signal 116 and the local decoded image signal 113, and R represents the number of encoded bits estimated by temporary encoding. When this cost J is used, a circuit scale increases because the temporary encoding and local decoding (dequantization and inverse transformation) are necessary every encoding mode. However, the accurate number of encoded bits and encoding distortion can be used, and the high encoding efficiency can be maintained. The cost may be calculated using only the number of encoded bits or only encoding distortion. The cost function may be calculated using a value approximate to these parameters.

The mode determination unit 102 is connected to the transformer 103 and inverse transformer 106. The mode information selected with the mode determination unit 102 and the predictive error signal 118 are input to the transformer 103. The transformer 103 transforms the input predictive error signal 118 into transform coefficients and generates transform coefficient data. The predictive error signal 118 is subjected to an orthogonal transform using a discrete cosine transform (DCT), for example. As a modification, the transform coefficient may be generated using a technique such as wavelet transform or independent component analysis.

The transform coefficient provided from the transformer 103 is sent to the quantizer 104 and quantized thereby. The quantization parameter necessary for quantization is set to the encoding controller 110. The quantizer 104 quantizes the transform coefficient using the quantization matrix 114 input from a quantization matrix generator 109 and generates a quantized transform coefficient 112.

The quantized transform coefficient 112 is input to the encoding processor 111 along with information on prediction methods such as mode information and quantization parameter. The encoding processor 111 subjects the quantized transform coefficient 112 along with the input mode information to entropy encoding (Huffman encoding or arithmetic encoding). The code data 115 provided by the entropy encoding of the encoding processor 111 is output from the video encoder 100 to the output buffer 120 and multiplexed. The multiplexed code data is transmitted from the output buffer 120.

When the quantization matrix 114 to be used for quantization is generated, instruction information indicating use of the quantization matrix is provided to the generation parameter generator 108 by the encoding controller 110. The generation parameter generator 108 sets a quantization matrix generation parameter 117 according to the instruction information, and outputs it to the quantization matrix generator 109 and the encoding processor 111.

The quantization matrix generation parameter 117 may be set by an external parameter setting unit (not shown) controlled by the encoding controller 110. Also, it may be updated in units of block of coded image, in units of slice or in units of picture. The generation parameter generator 108 comprises a function for controlling a setting timing of the quantization matrix generation parameter 117.

The quantization matrix generator 109 generates a quantization matrix 114 by a method established to the quantization matrix generation parameter 117 and output it to the quantizer 104 and the dequantizer 105. At the same time, the quantization matrix generation parameter 117 input to the encoding processor 111 is subjected to entropy coding along with mode information and transfer coefficient 112 which are input from the quantizer 104.

The dequantizer 105 dequantizes the transform coefficient 112 quantized with the quantizer 104 according to the quantization parameter set by the encoding controller 110 and the quantization matrix 114 input from the quantization matrix generator 109. The dequantized transform coefficient is sent to the inverse transformer 106. The inverse transformer 106 subjects the dequantized transform coefficient to inverse transform (for example, inverse discrete cosine transform) to decode a predictive error signal.

The predictive error signal 116 decoded with the inverse transformer 106 is added to the predictive image signal 118 for a determination mode, which is supplied from the mode determination unit 102. The addition signal of the predictive error signal and predictive image signal 118 becomes a local decoded signal 113 and is input to the reference memory 107. The reference image memory 107 stores the local decoded signal 113 as a reconstruction image. The image stored in the reference image memory 107 in this way becomes a reference image referred to when the predictor 101 generates a predictive image signal.

When an encoding loop (a process to be executed in order of the predictor 101 → the mode determination unit 102 → the transformer 103 → the quantizer 104 → the dequantizer 105 → the inverse transformer 106 → the reference image memory 107 in FIG. 1) is executed for all modes selectable for an object macroblock, one loop is completed. When the encoding loop is completed for the macroblock, the input image signal 116 of the next block is input and encoded. The quantization matrix generator 108 needs not generate a quantization matrix every macroblock. The generated quantization matrix is held unless the quantization matrix generation parameter 117 set by the generation parameter generator 108 is updated.

The encoding controller 110 performs a feedback control of the number of encoded bits, a quantization characteristic control thereof, a mode determination control, etc. Also, the encoding controller 110 performs a rate control for controlling the number of encoded bits, a control of the predictor 101, and a control of an external input parameter. At the same time, the encoding controller 110 controls the output buffer 120 to output code data to an external at an appropriate timing.

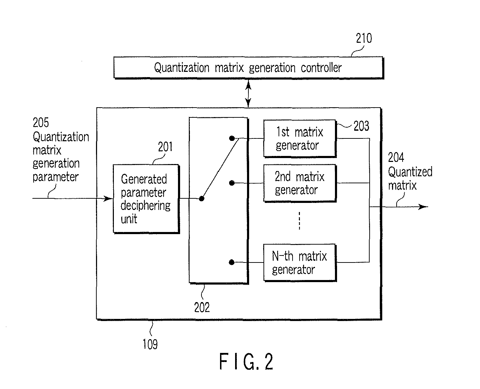

The quantization matrix generator 109 shown in FIG. 2 generates the quantization matrix 114 based on the input quantization matrix generation parameter 117. The quantization matrix is a matrix as shown in FIG. 5A or a matrix as shown in FIG. 5B. The quantization matrix is subjected to weighting by a corresponding weighting factor every frequency point in the case of quantization and dequantization. FIG. 5A shows a quantization matrix corresponding to a 4x4 pixel block and FIG. 5B shows a quantization matrix corresponding to a 8x8 pixel block. The quantization matrix generator 109 comprises a generated parameter deciphering unit 201, a switch 202 and one or more matrix generators 203. A generated parameter deciphering unit 201 deciphers the input quantization matrix generation parameter 117, and outputs change over information of the switch 202 according to each matrix generation method. This change over information is set by the quantization matrix generation controller 210 and changes the output terminal of the switch 202.

The switch 202 is switched according to switch information provided by the generated parameter deciphering unit 201 and set by the quantization matrix generation controller 210. For example, when the matrix generation type of the quantization matrix generation parameter 117 is a first type, the switch 202 connects the output terminal of the generated parameter deciphering unit 201 to the matrix generator 203. On the other hand, when the matrix generation type of the quantization matrix generation parameter 117 is an N-th type, the switch 202 connects the output terminal of the generated parameter deciphering unit 201 to the N-th matrix generator 203.

When the matrix generation type of the quantization matrix generation parameter 117 is a M-th type (N < M) and the M-th matrix generator 203 is not included in the quantization matrix generator 109, the switch 202 is connected to the corresponding matrix generator by a method in which the output terminal of the generated parameter deciphering unit 201 is determined beforehand. For example, when a quantization matrix generation parameter of the type that does not exist in the quantization matrix generator 109 is input, the switch 202 always connects the output terminal to the first matrix generator. When a similar matrix generation type is known, it may be connected to the matrix generator of the nearest L-th to the input M-th type. In any case, the quantization matrix generator 109 connects the output terminal of the generated parameter deciphering unit 201 to one of the first to N-th matrix generators 203 according to the input quantization matrix generation parameter 117 by a predetermined connection method.

Each matrix generator 203 generates the quantization matrix 114 according to information of the corresponding quantization matrix generation parameter. Concretely, the quantization matrix generation parameter information 117 is composed of parameter information of a matrix generation type (T), a change degree (A) of quantization matrix, a distortion degree (B) and a correction item (C). These parameters are labeled by different names, but may be used in any kind of ways. These parameters are defined as a parameter set expressed by the following equation (3):

$$\text{QMP} = (T, A, B, C) \qquad (3)$$

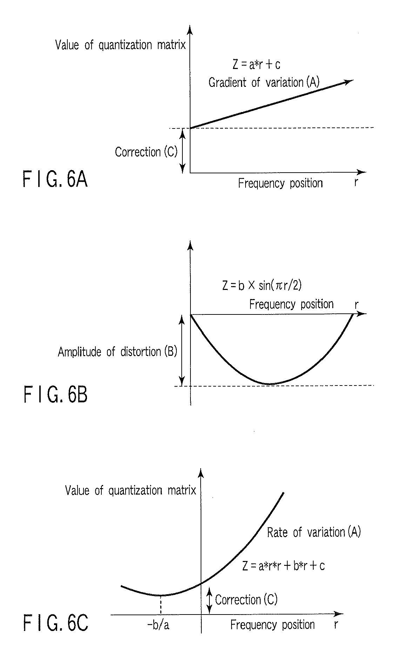

QMP represents the quantization matrix generation parameter information. The matrix generation type (T) indicates that the matrix generator 203 corresponding to which type should be used. On the other hand, how to use the change degree (A), distortion degree (B) and correction item (C) can be freely defined every matrix generation type. The first matrix generation type is explained referring to FIG. 6A.

A matrix generation function when the matrix generation type is 1 is represented by the following equations (4) (5) and (6):

[formula 1]

$$r = |x + y| \qquad (4)$$

$$Q_{4x4}(x, y) = a * r + c \qquad (5)$$

$$Q_{8x8}(x, y) = \frac{a}{2} * r + c \qquad (6)$$

Further, table conversion examples of the change degree (A), distortion degree (B) and correction item (C) used for the first matrix type are shown by the following equations (7), (8) and (9):

$$a = 0.1 * A \qquad (7)$$

$$B = 0 \qquad (8)$$

$$c = 16 + C \qquad (9)$$

where the change degree (A) represents a degree of change when the distance from the DC component to the frequency position of the quantization matrix is assumed to be r. For example, if the change degree (A) is a positive value, the value of the matrix increases as the distance r increases. In this case, the high bandwidth can be set at a large value. In contrast, if the change degree (A) is a negative value, the value of the matrix increases with increase of the distance r. In this case, the quantization step can be set coarsely in the low bandwidth. In the first matrix generation type, a 0 value is always set without using the distortion degree (B). On the other hand, the correction item (C) represents a segment of a straight line expressed by the change degree (A). Because the first matrix generation function can be processed by only multiplication, addition, subtraction and shift operation, it is advantageous that a hardware cost can be decreased.

The quantization matrix generated based on equations (7), (8) and (9) in the case of QMP = (1, 40, 0, 0) is expressed by the following equation (10):

[formula 2]

$$Q_{4x4}(x,y) = \begin{bmatrix} 16 & 20 & 24 & 28 \\ 20 & 24 & 28 & 32 \\ 24 & 28 & 32 & 36 \\ 28 & 32 & 36 & 40 \end{bmatrix}$$

(10)

Since precision of variable of each of the change degree (A), distortion degree (B) and correction item (C) influences a hardware scale, it is important to prepare a table having the good efficiency in a decided range. In the equation (7), when the change degree (A) is assumed to be a nonnegative integer of 6 bits, it is possible to obtain a gradient from 0 to 6.4. However, a negative value cannot be obtained. Accordingly, it is possible to obtain a range from -6.3 to 6.4 bits by using a translation table using 7 bits as indicated by the following equation (11):

$$\alpha = 0.1 \times (A - 63)$$

(11)

If the translation table of the change degree (A), distortion degree (B) and correction item (C) corresponding to a matrix generation type (T) is provided, and precision of the change degree (A), distortion degree (B) and correction item (C) is acquired every matrix generation type (T), it is possible to set an appropriate quantization matrix generation parameter according to the encoding situation and use environment. In the first matrix generation type expressed by the equations (4), (5) and (6), the distortion degree (B) becomes always 0. Therefore, it is not necessary to transmit a parameter corresponding to the distortion degree (B). By the matrix generation type, the number of parameters to be used may be decreased. In this case, the unused parameters is not encoded.

Subsequently, a quantization matrix generation function using a quadratic function is shown as the second matrix generation type. The schematic diagram of this matrix generation type is shown in FIG. 6C.

[formula 3]

$$Q_{4x4}(x,y) = \frac{a}{4} * r^2 + \frac{b}{2} * r + c$$

(12)

$$Q_{8x8}(x,y) = \frac{a}{16} * r^2 + \frac{b}{8} * r + c$$

(13)

Parameters (A), (B) and (C) related to functions a, b and c, respectively, represent a change degree, distortion and correction value of the quadratic function. These functions are apt to greatly increase in value as particularly a distance increases. When the quantization matrix in the case of QMP = (2, 10, 1, 0) is calculated using, for example, the equations (4), (8) and (10), a quantization matrix of the following equation (14) can be generated.

[formula 4]

$$Q_{4x4}(x,y) = \begin{bmatrix} 16 & 17 & 18 & 20 \\ 17 & 18 & 20 & 22 \\ 18 & 20 & 22 & 25 \\ 20 & 22 & 25 & 28 \end{bmatrix}$$

(14)

Further, the following equations (15) and (16) represent examples of matrix generation functions of the third matrix generation type.

[formula 5]

$$Q_{4x4}(x,y) = a * r + b(\sin(\frac{\pi}{16}r)) + c \qquad (15)$$

$$Q_{8x8}(x,y) = \frac{a}{2} * r + \frac{b}{2}(\sin(\frac{\pi}{32}r)) + c \qquad (16)$$

The distortion item shown in FIG. 6B is added to the first matrix type. The distortion amplitude (B) represents the magnitude of the amplitude of a sine function. When b is a positive value, the effect that a straight line is warped on the downside emerges. On the other hand, when b is a negative value, an effect that the straight line is warped on the upper side emerges. It is necessary to change the corresponding phase by a 4x4 pixel block or 8x8 pixel block. Various distortions can be generated by changing the phase. When the quantization matrix in the case of QMP = (3, 32, 7, -6) is calculated using the equations (4) and (15), the quantization matrix of the following equation (17) can be generated.

[formula 6]

$$Q_{4x4}(x,y) = \begin{bmatrix} 10 & 14 & 19 & 23 \\ 14 & 19 & 23 & 27 \\ 19 & 23 & 27 & 31 \\ 23 & 27 & 31 & 35 \end{bmatrix} \qquad (17)$$

Although a sine function is used in this embodiment, a cosine function and other functions may be used, and a phase or a period may be changed. The distortion amplitude (B) can use various functions such as sigmoid function, Gaussian function, logarithmic function and N-dimensional function. Further, when variables of the change degree (A) including the distortion amplitude (B) and the correction item (C) are an integer value, a translation table may be prepared beforehand to avoid the computation process of the high processing load such as sine functions.

The function used for the matrix generation type is subjected to real number calculation. Accordingly, when sine function calculation is done every encoding, the calculation process increases. Further, hardware for performing sine function calculation must be prepared. Thus, a translation table according to precision of a parameter to be used may be provided.

Since floating-point calculation increases in cost in comparison with integer calculation, the quantization matrix generation parameters are defined by integer values respectively, and a corresponding value is extracted from an individual translation table corresponding to a matrix generation type.

When calculation of real number precision is possible, the distance may be computed by the following equation (18).

[formula 7]

$$r = \sqrt{x^2 + y^2} \qquad (18)$$

Further, it is possible to change values in vertical and lateral directions of the quantization matrix by weighting it according to the distance. Placing great importance on, for example, a vertical direction, a distance function as indicated by the following equation (19) is used.

[formula 8]

$$r = |2x + y| \qquad (19)$$

When a quantization matrix in the case of QMP = (2, 1, 2, 8) is generated by the above equation, a quantization matrix expressed by the following equation (20) is provided.

[formula 9]

$$Q_{4x4}(x,y) = \begin{bmatrix} 8 & 10 & 14 & 20 \\ 9 & 12 & 17 & 24 \\ 10 & 14 & 20 & 28 \\ 12 & 17 & 24 & 33 \end{bmatrix}$$

(20)

The quantization matrixes 204 generated with the first to N-th matrix generators 203 are output from the quantization matrix generator 109 selectively. The quantization matrix generation controller 210 controls the switch 202 to switch the output terminal of the switch 202 according to every matrix generation type deciphered with the generation parameter deciphering unit 201. Further, the quantization matrix generation controller 210 checks whether the quantization matrix corresponding to the quantization matrix generation parameter is generated properly.

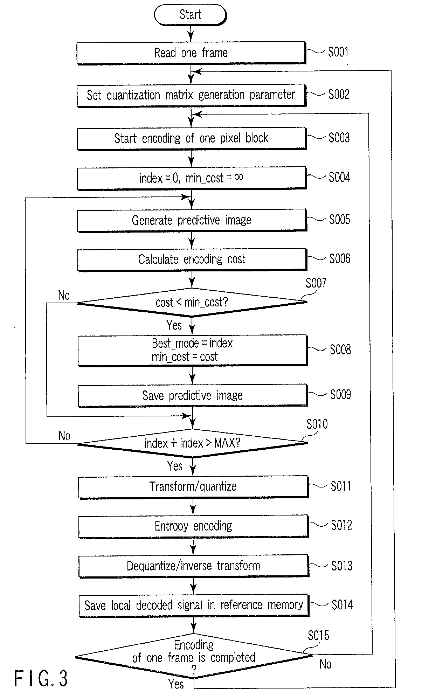

The configurations of the video encoding apparatus 100 and quantization matrix generator 109 according to the embodiment are explained hereinbefore. An example to carry out a video encoding method with the video encoding apparatus 100 and quantization matrix generator 109 will be described referring to a flow chart of FIG. 3.

At first, an image signal of one frame is read from an external memory (not shown), and input to the video encoding apparatus 100 as the input image signal 116 (step S001). The input image signal 116 is divided into macroblocks each composed of 16x16 pixels. A quantization matrix generation parameter 117 is set to the video encoding apparatus 100 (S002). That is, the encoding controller 110 sends information indicating to use a quantization matrix for the current frame to the parameter generator 108. When receiving this information, the parameter generator 108 sends the quantization matrix generation parameter to the quantization matrix generator 109. The quantization matrix generator 109 generates a quantization matrix according to a type of the input quantization matrix generation parameter.

When the input image signal 116 is input to the video encoding apparatus 100, encoding is started in units of a block (step S003). When one macroblock of the input image signal 116 is input to the predictor 101, the mode determination unit 102 initializes an index indicating an encoding mode and a cost (step S004). A predictive image signal 118 of one prediction mode selectable in units of block is generated by the predictor 101 using the input image signal 116 (step S005). A difference between this predictive image signal 118 and the input image signal 116 is calculated whereby a predictive error signal 119 is generated. A cost is calculated from the absolute value sum SAD of this predictive error signal 119 and the number of encoded bits OH of the prediction mode (step S006). Otherwise, local decoding is done to generate a local decoded signal 113, and the cost is calculated from the number of encoded bits D of the error signal indicating a differential value between the local decoded signal 113 and the input image signal 116, and the number of encoded bits R of an encoded signal obtained by encoding temporally the input image signal.

The mode determination unit 102 determines whether the calculated cost is smaller than the smallest cost min_cost (step S007). When it is smaller (the determination is YES), the smallest cost is updated by the calculated cost, and an encoding mode corresponding to the calculated cost is held as a best_mode index (step S008). At the same time a predictive image is stored (step S009). When the calculated cost is larger than the smallest cost min_cost (the determination is NO), the index indicating a mode number is incremented, and it is determined whether the index after increment is the last mode (step S010).

When the index is larger than MAX indicating the number of the last mode (the determination is YES), the encoding mode information of best_mode and predictive error signal 119 are send to the transformer 103 and the quantizer 104 to be transformed and quantized (step S011). The quantized transform coefficient 112 is input to the encoding processor 111 and entropy-encoded along with predictive information with the encoding processor 111 (step S012). On the other hand, when index is smaller than MAX indicating the number of the last mode (the determination is NO), the predictive image signal 118 of an encoding mode indicated by the next index is generated (step S005).

When encoding is done in best_mode, the quantized transform coefficient 112 is input to the dequantizer 105 and the inverse transformer 106 to be dequantized and inverse-transformed (step S013), whereby the predictive error signal is decoded. This decoded predictive error signal is added to the predictive image signal of best_mode provided from the mode determination unit 102 to generate a local decoded signal 113. This local decoded signal 113 is stored in the reference image memory 107 as a reference image (step S014).

Whether encoding of one frame finishes is determined (step S015). When the process is completed (the determination is YES), an input image signal of the next frame is read, and then the process returns to step S002 for encoding. On the other hand, when the encoding process of one frame is not completed (the determination is NO), the process returns to step 003, and then the next pixel block is input and the encoding process is continued.

The above is the brief of the video encoding apparatus 100 and video encoding method in the embodiment of the present invention.

In the above embodiment, the quantization matrix generator 108 generates and uses one quantization matrix to encode one frame. However, a plurality of quantization matrixes may be generated for one frame by setting a plurality of quantization matrix generation parameters. In this case, since a plurality of quantization matrixes generated in different matrix generation types with the first to N-th matrix generators 203 can be switched in one frame, flexible quantization becomes possible. Concretely, the first matrix generator generates a quantization matrix having a uniform weight, and the second matrix generator generates a quantization matrix having a large value in a high bandwidth. Control of quantization is enabled in a smaller range by changing these two matrixes every to-be-encoded block. Because the number of encoded bits transmitted for generating the quantization matrix is several bits, the high encoding efficiency can be maintained.

In the embodiment of the present invention, there is explained a quantization matrix generation technique of a 4x4 pixel block size and a 8x8 pixel block size for generation of a quantization matrix concerning a luminance component. However, generation of the quantization matrix is possible by a similar scheme for a color difference component. Then, in order to avoid increase of overhead for multiplexing the quantization matrix generation parameter of color difference component with syntax, the same quantization matrix as the luminance component may be used, and the quantization matrix with an offset corresponding to each frequency position may be made and used.

In the present embodiment of the present invention, there is explained a quantization matrix generation method using a trigonometric function (a sine function) in the N-th matrix generator 203. However, the function to be used may be sigmoid function and Gaussian function. It is possible to make a more complicated quantization matrix according to a function type. Further, when the corresponding matrix generation type (T) among the quantization matrix generation parameters QMP provided from the quantization matrix generation controller 210 cannot use in the video encoding apparatus, it is possible to make a quantization matrix by substituting the matrix generation type well-resembling the matrix generation type (T). Concretely, the second matrix generation type is a function that a distortion degree using a sine function is added to the first matrix generation type, and similar to the tendency of the generated quantization matrix. Therefore, when the third matrix generator cannot be used in the encoding apparatus when T = 3 is input, the first matrix generator is used.

In the embodiment of the present invention, four parameters of the matrix generation type (T), the change degree (A) of quantization matrix, the distortion degree (B) and the correction item (C) are used. However, parameters aside from these parameters may be used, and the number of parameters decided by the matrix generation type (T) can be used. Further, a translation table of parameters decided by the matrix generation type (T) beforehand may be provided. The number of encoded bits for encoding the quantization matrix generation parameters decreases as the number of quantization matrix generation parameters to be transmitted decreases and the precision lowers. However, since at the same time the degree of freedom of the quantization matrix lowers, the number of quantization matrix generation parameters and the precision thereof have only to be selected in consideration of balance between a profile and hardware scale to be applied.

In the embodiment of the present invention, a to-be-processed frame is divided into rectangular blocks of 16x16 pixel size, and then the blocks are encoded from an upper left of a screen to a lower right thereof, sequentially. However, the sequence of processing may be another sequence. For example, the blocks may be encoded from the lower-right to the upper left, or in a scroll shape from the middle of the screen. Further, the blocks may be encoded from the upper right to the lower left, or from the peripheral part of the screen to the center part thereof.

In the embodiment of the present invention, the frame is divided into macroblocks of a 16x16 pixel block size, and a 8x8 pixel block or a 4x4 pixel block is used as a processing unit for intra-frame prediction. However, the to-be-processed block needs not to be made in a uniform block shape, and may be make in a pixel block size such as a 16x8 pixel block size, 8x16 pixel block size, 8x4 pixel block size, 4x8 pixel block size. For example, a 8x4 pixel block and a 2x2 pixel block are available under a similar framework. Further, it is not necessary to take a uniform block size in one macroblock, and different block sizes may be selected. For example, a 8x8 pixel block and a 4x4 pixel block may be coexisted in the macroblock. In this case, although the number of encoded bits for encoding divided blocks increases with increase of the number of divided blocks, prediction of higher precision is possible, resulting in reducing a prediction error. Accordingly, a block size has only to be selected in consideration of balance between the number of encoded bits of transform coefficients and local decoded image.

In the embodiment of the present invention, the transformer 103, quantizer 104, dequantizer 105 and inverse transformer 106 are provided. However, the predictive error signal needs not to be always subjected to the transformation, quantization, inverse transformation and dequantization, and the predictive error signal may be encoded with the encoding processor 109 as it is, and the quantization and inverse quantization may be omitted. Similarly, the transformation and inverse transformation need not be done.

(Second embodiment: encoding)

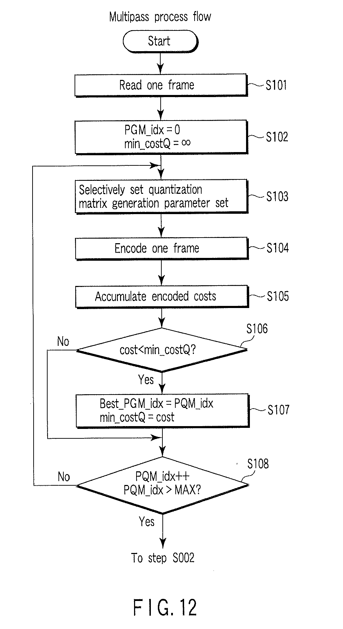

Multipath encoding concerning the second embodiment is explained referring to a flow chart of FIG. 12. In this embodiment, the detail description of the encoding flow having the same function as the first embodiment of FIG. 3, that is, steps S002 - S015, is omitted. When the optimal quantization matrix is set every picture, the quantization matrix must be optimized. For this reason, multipath encoding is effective. According to this multipath encoding, the quantization matrix generation parameter can be effectively selected.

In this embodiment, for multipath encoding, steps S101 - S108 are added before step S002 of the first embodiment as shown in FIG. 12. In other words, at first, the input image signal 116 of one frame is input to the video encoding apparatus 100 (step S101), and encoded by being divided into macroblocks of 16x16 pixel size. Then, the encoding controller 110 initializes an index of the quantization matrix generation parameter used for the current frame to 0, and initializes min_costQ representing the minimum cost, too (step S102). Then, the quantization matrix generation controller 210 selects an index of the quantization matrix generation parameter shown in PQM_idx from a quantization matrix generation parameter set, and send it to the quantization matrix generator 109. The quantization matrix generator 109 generates the quantization matrix according to a scheme of the input quantization matrix generation parameter (step S103). One frame is encoded using the quantization matrix generated in this time (step S104). A cost accumulates every macroblock to calculate an encoding cost of one frame (step S105).

It is determined whether the calculated cost is smaller than the smallest cost min_costQ (step S106). When the calculated cost is smaller than the smallest cost (the determination is YES), the smallest cost is updated by the calculation cost. In this time, the index of the quantization matrix generation parameter is held as a Best_PQM_idx index (step S107). When the calculated cost is larger than the smallest cost min_costQ (the determination is NO), PQM_index is incremented and it is determined whether the incremented PQM_idx is last (step S108). If the determination is NO, the index of the quantization matrix generation parameter is updated, and further encoding is continued. On the other hand, if the determination is YES, Best_PQM_idx is input to the quantization matrix generator 109 again, and the main encoding flow, that is, steps S002 - S015 of FIG. 3 are executed. When the code data encoded in Best_PQM_idx at the time of multipath process is held, the main encoding flow needs not be executed, and thus it is possible to finish encoding of the frame by updating the code data.

In the second embodiment, when encoding is done in multipath, it is not necessary to always encode the whole frame. An available quantization matrix generation parameter can be determined by transform coefficient distribution obtained in units of block. For example, when transform coefficients generated at a low rate are almost 0, because the property of the code data does not change even if the quantization matrix is not used, the process can be largely reduced.

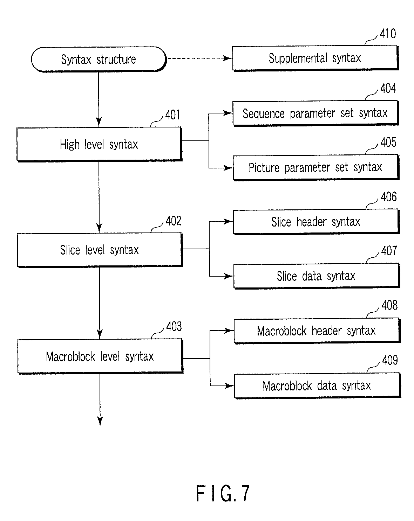

There will be explained an encoding method of a quantization matrix generation parameter. As shown in FIG. 7, the syntax is comprised of three parts mainly. A high-level syntax (401) is packed with syntax information of higher-level layers than a slice level. A slice level syntax (402) describes necessary information every slice. A macroblock level syntax (403) describes a change value of quantization parameter or mode information needed for every macroblock. These syntaxes are configured by further detailed syntaxes. In other words, the high-level syntax (401) is comprised of sequences such as sequence parameter set syntax (404) and picture parameter set syntax (405), and a syntax of picture level. A slice level syntax (402) is comprised of a slice header syntax (406), a slice data syntax (407), etc. Further, the macroblock level syntax (403) is comprised of a macroblock header syntax (408), macroblock data syntax (409), etc.

The above syntaxes are components to be absolutely essential for decoding. When the syntax information is missing, it becomes impossible to reconstruct correctly data at the time of decoding. On the other hand, there is a supplementary syntax for multiplexing the information that is not always needed at the time of decoding. This syntax describes statistical data of an image, camera parameters, etc., and is prepared as a role to filter and adjust data at the time of decoding.

In this embodiment, necessary syntax information is the sequence parameter set syntax (404) and picture parameter set syntax (405). Each syntax is described hereinafter.

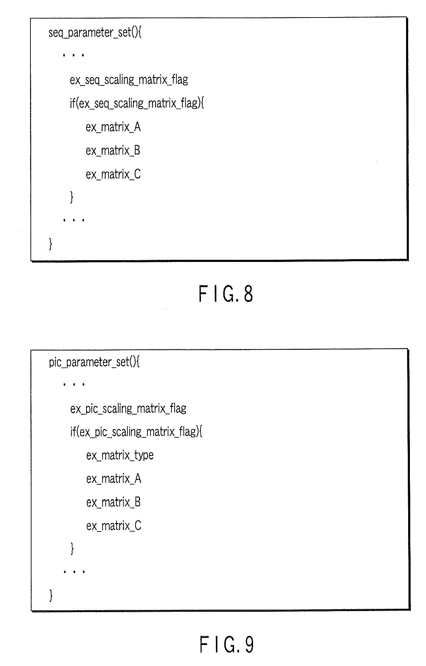

ex_seq_scaling_matrix_flag shown in the sequence parameter set syntax of FIG. 8 is a flag indicating whether the quantization matrix is used. When this flag is TRUE, the quantization matrix can be changed in units of sequence. On the other hand, when the flag is FALSE, the quantization matrix cannot be used in the sequence. When ex_seq_scaling_matrix_flag is TRUE, further ex_matrix_type, ex_matrix_A, ex_matrix_B and ex_matrix_C are sent. These correspond to the matrix generation type (T), change degree (A) of quantization matrix, distortion degree (B) and correction item (C), respectively.

ex_pic_scaling_matrix_flag shown in the picture parameter set syntax of FIG. 9 is a flag indicating whether the quantization matrix is changed every picture. When this flag is TRUE, the quantization matrix can be changed in units of picture. On the other hand, when the flag is FALSE, the quantization matrix cannot be changed every picture. When ex_pic_scaling_matrix_flag is TRUE, further ex_matrix_type, ex_matrix_A, ex_matrix_B and ex_matrix_C are transmitted. These correspond to the matrix generation type (T), change degree (A) of quantization matrix, distortion degree (B) and correction item (C), respectively.

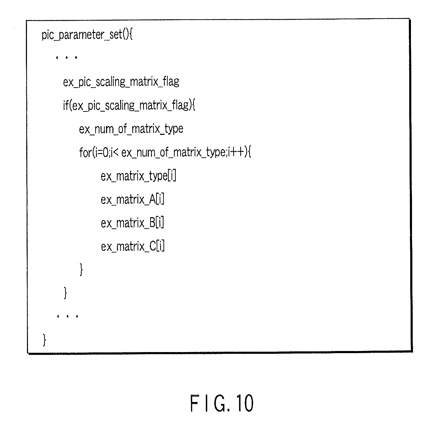

An example that a plurality of quantization matrix generation parameters are sent is shown in FIG. 10 as another example of the picture parameter set syntax. ex_pic_scaling_matrix_flag shown in the picture parameter set syntax is a flag indicating whether the quantization matrix is changed every picture. When the flag is TRUE, the quantization matrix can be changed in units of picture. On the other hand, when the flag is FALSE, the quantization matrix cannot be changed every picture. When ex_pic_scaling_matrix_flag is TRUE, further, ex_num_of_matrix_type is sent. This value represents the number of sets of quantization matrix generation parameters. A plurality of quantization matrixes can be sent by the combination of sets. ex_matrix_type, ex_matrix_A, ex_jnatrix_B and ex_matrix_C, which are sent successively, are sent by a value of ex_num_of_matrix_type. As a result, a plurality of quantization matrixes can be provided in a picture. Further, when the quantization matrix is to be changed in units of block, bits may be transmitted every block by the number of corresponding quantization matrixes, and exchanged. For example, if ex_num_of_matrix_ type is 2, a syntax of 1 bit is added to the macroblock header syntax. The quantization matrix is changed according to whether this value is TRUE or FALSE.

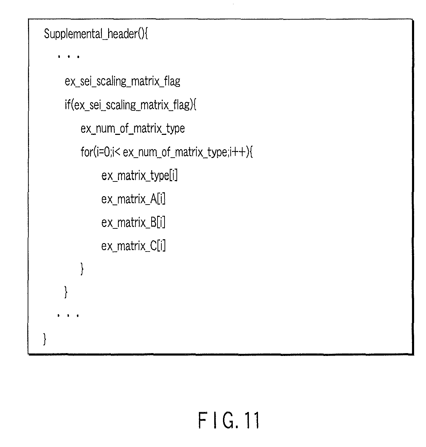

In the present embodiment, when a plurality of quantization matrix generation parameters are held in one frame as described above, they may be multiplexed on a supplementary syntax. An example that a plurality of quantization matrix generation parameters are sent using the supplemental syntax is shown in FIG. 11. ex_sei_scaling_matrix_flag shown in the supplemental syntax is a flag indicating whether a plurality of quantization matrixes are changed. When this flag is TRUE, the quantization matrixes can be changed. On the other hand, when the flag is FALSE, the quantization matrixes cannot be changed. When ex_sei_scaling_matrix_flag is TRUE, further, ex_num_of_matrix_type is sent. This value indicates the number of sets of quantization matrix generation parameters. A plurality of quantization matrixes can be sent by the combination of sets. As for ex_matrix_type, ex_matrix_A, ex_matrix_B, ex_matrix_C, which are sent successively, only a value of ex_num_of_matrix_type is sent. As a result, a plurality of quantization matrixes can be provided in the picture.

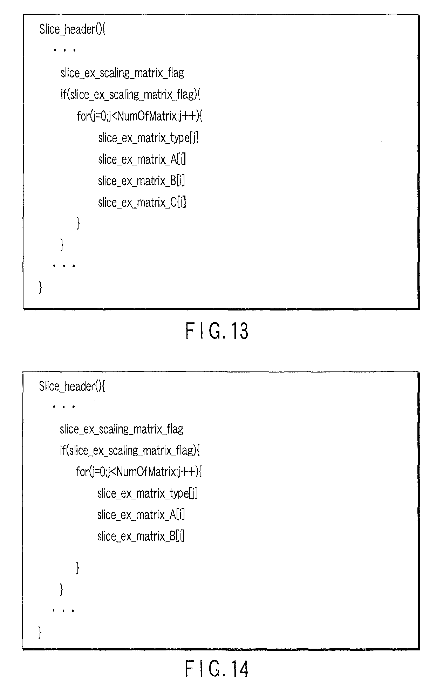

In this embodiment, the quantization matrix can be retransmitted by the slice header syntax in the slice level syntax shown in FIG. 7. An example of such a case will be explained using FIG. 13. FIG. 13 shows the syntax structure in the slice header syntax. The slice_ex_scaling_matrix_flag shown in the slice header syntax of FIG. 13 is a flag indicating whether a quantization matrix can be used in the slice. When the flag is TRUE, the quantization matrix can be changed in the slice. When the flag is FALSE, the quantization matrix cannot be changed in the slice. The slice_ex_matrix_type is transmitted when the slice_ex_scaling_matrix_flag is TRUE. This syntax corresponds to a matrix generation type (T). Successively, slice_ex_matrix_A, slice_ex_matrix_B and slice_ex_matrix_C are transmitted. These correspond to a change degree (A) of a quantization matrix (C), a distortion degree (B) thereof and a correction item thereof respectively. NumOfMatrix in FIG. 13 represents the number of available quantization matrixes in the slice. When the quantization matrix is changed in a smaller region in slice level, it is changed in luminance component and color component, it is changed in quantization block size, it is changed every encoding mode, etc., the number of available quantization matrixes can be transmitted as a modeling parameter of the quantization matrix corresponding to the number. For purposes of example, when there are two kinds of quantization blocks of a 4x4 pixel block size and a 8x8 pixel block size in the slice, and different quantization matrixes can be used for the quantization blocks, NumOfMatrix value is set to 2.

In this embodiment of the present invention, the quantization matrix can be changed in slice level using the slice header syntax shown in FIG. 14. In FIG. 14, three modeling parameters to be transmitted are prepared compared with FIG. 13. When a quantization matrix is generated with the use of, for example, the equation (5), the parameter needs not be transmitted because the distortion degree (B) is always set to 0. Therefore, the encoder and decoder can generate the identical quantization matrix by holding an initial value of 0 as an internal parameter.

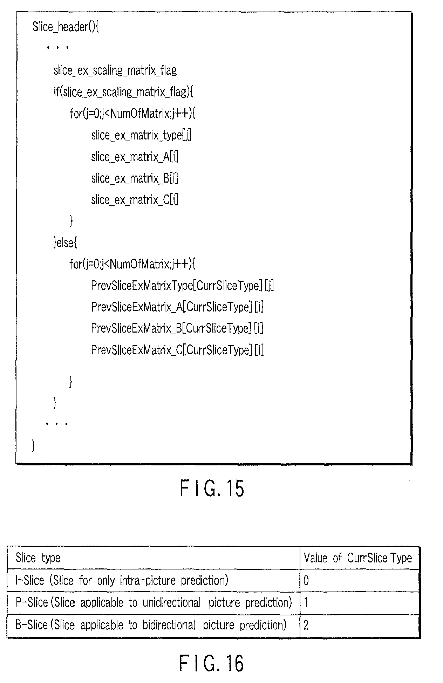

In this embodiment, the parameter can be transmitted using the slice header syntax expressed in FIG. 15. In FIG. 15, PrevSliceExMatrixType, PrevSliceExMatrix_A and PrevSliceExMatrix_B (further, PrevSliceExMatrix_C) are added to FIG. 13. Explaining more concretely, slice_ex_scaling_matrix_flag is a flag indicating whether or not the quantization matrix is used in the slice, and when this flag is TRUE, a modeling parameter is transmitted to a decoder as shown in FIGS. 13 and 14. On the other hand, when the flag is FALSE, PrevSliceExMatrixType, PrevSliceExMatrix_A and PrevSliceExMatrix_B (further, PrevSliceExMatrix_C) are set. These meanings are interpreted as follows.

PrevSliceExMatrixType indicates a generationg type (T) used at the time when data is encoded in the same slice type as that of one before the current slice in order of encoding. This variable is updated immediately before that encoding of the slice is finished. The initial value is set to 0.

PrevSliceExMatrix_A indicates a change degree (A) used at the time when data is encoded in the same slice type as that of one before the current slice in oder of encoding. This variable is updated immediately before that encoding of the slice is finished. The initial value is set to 0.

PrevSliceExMatrix_B indicates a disortion degree (B) used at the time when data is encoded in the same slice type as that of one before the current slice in order of encoding. This variable is updated immediately before that encoding of the slice is finished. The initial value is set to 0.

PrevSliceExMatrix_C indicates a correction item (C) used at the time when data is encoded in the same slice type as that of one before the current slice in order of encoding. This variable is updated immediately before that encoding of the slice is finished. The initial value is set to 16.

CurrSliceType indicates a slice type of the current encoded slice, and a corresponding index is assigned to each of, for example, I-Slice, P-Slice and B-Slice. An example of CurrSliceType is shown in FIG. 16. A value is assigned to each of respective slice types. 0 is assigned to I-Slice using only intra-picture prediction, for example. Further, 1 is assigned to P-Slice capable of using a single directinal prediction from the encoded frame encoded previously in order of time and intra-picture prediction. On the other hand, 2 is assinge to B-Slice capable of using bidirectional prediction, single directinal prediction and intra-picture prediction.

In this way, the modeling parameter of the quantization matrix encoded in the same slice type as that of the slice immediately before the current slice is accessed and reset. As a result, it is possible to reduce the number of encoded bits necessary for transmitting the modeling parameter.

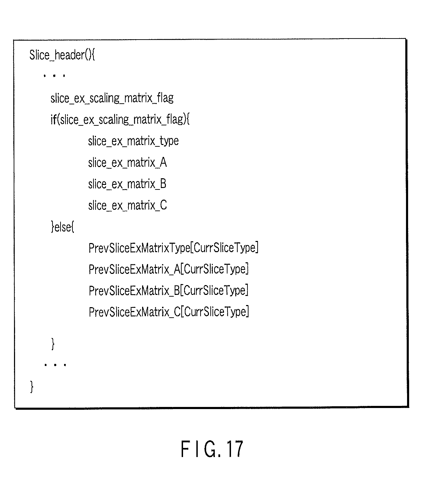

In this embodiment of the present invention, FIG. 17 can be used. FIG. 17 shows a structure that NumOfMatrix is removed from FIG. 5. When only one quantization matris is available for encoded slice, this syntax simplified more than FIG. 15 is used. This syntax shows approximately the same operation as the case that NumOfMatrix1 is 1 in FIG. 15.

When a plurality of quantization matrixes can be held in the same picture with the decoder, the quantization matrix generation parameter is read from the supplemental syntax to generate a corresponding quantization matrix. On the other hand, when a plurality of quantization matrixes cannot be held in the same picture, the quantization matrix generated by the quantization matrix generation parameter described in the picture parameter set syntax is used without decoding the supplemental syntax.

In the embodiment as discussed above, the quantization matrix is generated according to a corresponding matrix generation type. When the generation parameter of the quantization matrix is encoded, the number of encoded bits used for sending the quantization matrix can be reduced. Further, it becomes possible to select adaptively the quantization matrixes in the picture. The encoding capable of dealing with various uses such as quantization done in consideration of a subjectivity picture and encoding done in consideration of the encoding efficiency becomes possible. In other words, a preferred encoding according to contents of a pixel block can be performed.

As mentioned above, when encoding is performed in a selected mode, a decoded image signal has only to be generated only for the selected mode. It needs not be always executed in a loop for determining a prediction mode.

The video decoding apparatus corresponding to the video encoding apparatus is explained hereinafter.

(Third embodiment: Decoding)

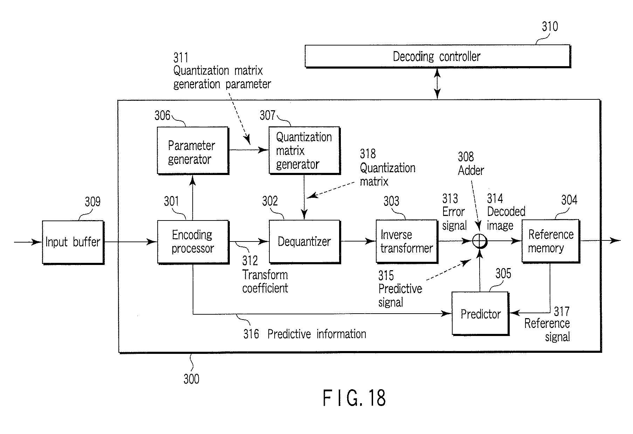

According to a video decoding apparatus 300 concerning the present embodiment shown in FIG. 18, an input buffer 309 once saves code data sent from the video encoding apparatus 100 of FIG. 1 via a transmission medium or recording medium. The saved code data is read out from the input buffer 309, and input to a decoding processor 301 with being separated based on syntax every one frame. The decoding processor 301 decodes a code string of each syntax of the code data for each of a high-level syntax, a slice level syntax and a macroblock level syntax according to the syntax structure shown in FIG. 7. Owning to this decoding, the quantized transform coefficient, quantization matrix generation parameter, quantization parameter, prediction mode information, prediction switching information, etc. are reconstructed.

The decoding processor 301 produces, from the decoded syntax, a flag indicating whether a quantization matrix is used for a corresponding frame, and input it to a generation parameter setting unit 306. When this flag is TRUE, a quantization matrix generation parameter 311 is input to the generation parameter setting unit 306 from the decoding processor 301. The generation parameter setting unit 306 has an update function of the quantization matrix generation parameter 311, and inputs a set of the quantization matrix generation parameters 311 to a quantization matrix generator 307 based on the syntax decoded by the decoding processor 301. The quantization matrix generator 307 generates a quantization matrix 318 corresponding to the input quantization matrix generation parameter 311, and outputs it to a dequantizer 302.

The quantized transform coefficient output from the encoding processor 301 is input to the dequantizer 302, and dequantized thereby based on the decoded information using the quantization matrix 318, quantization parameter, etc. The dequantized transform coefficient is input to an inverse transformer 303. The inverse transformer 303 subjects the dequantized transform coefficient to inverse transform (for example, inverse discrete cosine transform) to generate an error signal 313. The inverse orthogonal transformation is used here. However, when the encoder performs wavelet transformation or independent component analysis, the inverse transformer 303 may perform inverse wavelet transformation or inverse independence component analysis. The coefficient subjected to the inverse transformation with the inverse transformer 303 is send to an adder 308 as an error signal 313. The adder 308 adds the predictive signal 315 output from the predictor 305 and the error signal 313, and inputs an addition signal to a reference memory 304 as a decoded signal 314. The decoded image 314 is sent from the video decoder 300 to the outside and stored in the output buffer (not shown). The decoded image stored in the output buffer is read at the timing managed by the decoding controller 310.

On the other hand, the prediction information 316 and mode information which are decoded with the decoding processor 301 are input to the predictor 305. The reference signal 317 already encoded is supplied from the reference memory 304 to the predictor 305. The predictor 305 generates the predictive signal 315 based on input mode information, etc. and supplies it to the adder 308.

The decoding controller 310 controls the input buffer 307, output timing, decoding timing, etc.

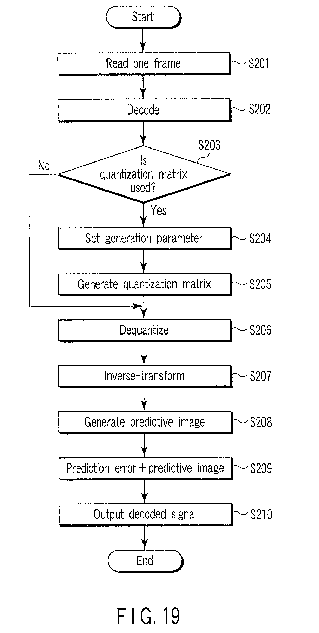

The video decoding apparatus 300 of the third embodiment is configured as described above, and the video decoding method executed with the video decoding apparatus 300 is explained referring to the flowchart of FIG. 19.

The code data of one frame is read from the input buffer 309 (step S201), and decoded according to a syntax structure (step S202). It is determined by a flag whether the quantization matrix is used for the readout frame based on the decoded syntax (step S203). When this determination is YES, a quantization matrix generation parameter is set to the quantization matrix generator 307 (step 204). The quantization matrix generator 307 generates a quantization matrix corresponding to the generation parameter (step 205). For this quantization matrix generation, a quantization matrix generator 307 having the same configuration as the quantization matrix generator 109 shown in FIG. 2 which is used for the video encoding apparatus is employed, and performs the same process as the video encoding apparatus to generate a quantization matrix. A generation parameter generator 306 for supplying a generation parameter to the quantization matrix generator 109 has the same configuration as the generation parameter generator 108 of the encoding apparatus.

In other words, in the generation parameter generator 306, the syntax is formed of three parts mainly, that is, a high-level syntax (401), a slice level syntax (402) and a macroblock level syntax (403) as shown in FIG. 7. These syntaxes are comprised of further detailed syntaxes like the encoding apparatus.

The above mentioned syntaxes are components that are absolutely imperative at the time of decoding. If these syntax information lack, data cannot be correctly decoded at the time of decoding. On the other hand, there is a supplementary syntax for multiplexing information that is not always needed at the time of decoding.

The syntax information which is necessary in this embodiment contains a sequence parameter set syntax (404) and a picture parameter set syntax (405). The syntaxes are comprised of a sequence parameter set syntax and picture parameter set syntax, respectively, as shown in FIGS. 8 and 9 like the video encoding apparatus.

As another example of the picture parameter set syntax can be used the picture parameter set syntax used for sending a plurality of quantization matrix generation parameters shown in FIG. 10 as described in the video encoding apparatus. However, if the quantization matrix is changed in units of block, the bits have only to be transmitted by the number of corresponding quantization matrixes for each block, and exchanged. When, for example, ex_num_of_matrix_type is 2, a syntax of 1 bit is added in the macroblock header syntax, and the quantization matrix is changed according to whether this value is TRUE or FALSE.

When, in this embodiment, a plurality of quantization matrix generation parameters are held in one frame as described above, data multiplexed with the supplementary syntax can be used. As described in the video encoding apparatus, it is possible to use the plurality of quantization matrix generation parameters using supplemental syntaxes shown in FIG. 11

In this embodiment of the present invention, re-receiving of a quantization matrix can be done by means of slice header syntax in slice level syntax shown in FIG. 7. An example of such a case is explained using FIG. 13. FIG. 13 shows a syntax structure in a slice header syntax. The slice_ex_scaling_matrix_flag shown in the slice header syntax of FIG. 13 is a flag indicating whether a quantization matrix is used in the slice. When the flag is TRUE, the quantization matrix can be changed in the slice. On the other hand, when the flag is FALSE, it is impossible to change the quantization matrix in the slice. When the slice_ex_scaling_matrix_flag is TRUE, slice_ex_matrix_type is received further. This syntax corresponds to a matrix generation type (T). Successively, slice_ex_matrix_A, slice_ex_matrix_B and slice_ex_matrix_C are received. These correspond to a change degree (A), a distortion degree (B) and a correction item of a quantization matrix (C), respectively. NumOfMatrix in FIG. 13 represents the number of available quantization matrixes in the slice. When the quantization matrix is changed in a smaller region in slice level, it is changed in luminance component and color component, it is changed in quantization block size, and it is changed every encoding mode, etc., the number of available quantization matrixes can be received as a modeling parameter of the quantization matrix corresponding to the number. For purposes of example, when there are two kinds of quantization blocks of a 4x4 pixel block size and a 8x8 pixel block size in the slice, and different quantization matrixes can be used for the quantization blocks, NumOfMatrix value is set to 2.

In this embodiment of the present invention, the quantization matrix can be changed in slice level using the slice header syntax shown in FIG. 14. In FIG. 14, three modeling parameters to be transmitted are prepared compared with FIG. 13. When the quantization matrix is generated with the use of, for example, the equation (5), the parameter needs not be received because the distortion degree (B) is always set to 0. Therefore, the encoder and decoder can generate the identical quantization matrix by holding an initial value of 0 as an internal parameter.

In this embodiment of the present invention, the parameter can be received using the slice header syntax expressed in FIG. 15. In FIG. 15, PrevSliceExMatrixType, PrevsliceExmatrix_A and PrevSliceExMatrix_B (further, PrevSliceExMatrix_C) are added to FIG. 13. Explaining more concretely, slice_ex_scaling_matrix_flag is a flag indicating whether or not the quantization matrix is used in the slice. When this flag is TRUE, a modeling parameter is received as shown in FIGS. 13 and 14. On the other hand, when the flag is FALSE, PrevSliceExMatrixType, PrevSliceExMatrix_A and PrevSliceExMatrix_B (further, PrevSliceExMatrix_C) are set. These meanings are interpreted as follows.

PrevSliceExMatrixType indicates a generationg type (T) used at the time when data is decoded in the same slice type as that of one before the current slice in order of decoding. This variable is updated immediately before that decoding of the slice is finished. The initial value is set to 0.

PrevSliceExMatrix_A indicates a change degree (A) used at the time when the slice is decoded in the same slice type as that of one before the current slice in oder of decoding. This variable is updated immediately before that decoding of the slice is finished. The initial value is set to 0.

PrevSliceExMatrix_B indicates a disortion degree (B) used at the time when the slice is decoded in the same slice type as that of one before the current slice in order of decoding. This variable is updated immediately before that decoding of the slice is finished. The initial value is set to 0.

PrevSliceExMatrix_C indicates a correction item (C) used at the time when data is decoded in the same slice type as that of one before the current slice in order of decoding. This variable is updated immediately before that decoding of the slice is finished. The initial value is set to 16.

CurrSliceType indicates a slice type of the current slice. Respective indexes are assigned to, for example, I-Slice, P-Slice and B-Slice, respectively. An example of CurrSliceType is shown in FIG. 16. Respective values are assigned to respective slice types. 0 is assigned to I-Slice using only intra-picture prediction, for example. Further, 1 is assigned to P-Slice capable of using single directional prediction from the encoded frame encoded previously in order of time and intra-picture prediction. Meanwhile, 2 is assigned to B-Slice capable of using bidirectional prediction, single directional prediction and intra-picture prediction.

In this way, the modeling parameter of the quantization matrix encoded in the same slice type as that of the slice immediately before the current slice is accessed and set again. As a result, it is possible to reduce the number of encoded bits necessary for receiving the modeling parameter.

In this embodiment of the present invention, FIG. 17 can be used. FIG. 17 shows a structure that NumOfMatrix is removed from FIG. 5. When only one quantization matrix is available for the slice, this syntax simplified more than FIG. 16 is used. This syntax shows approximately the same operation as the case that NumOfMatrix1 is 1 in FIG. 15.

When the quantization matrix is generated as described above, the decoded transform coefficient 312 is dequantized by the quantization matrix (step S206), and subjected to inverse transformation with the inverse transformer 303 (step S207). As a result, the error signal is reproduced. Then, a predictive image is generated by the predictor 305 based on the prediction information 316 (S209). This predictive image and the error signal are added to reproduce a decoded image data (step S209). This decoding picture signal is stored in the reference memory 304, and output to an external device.

In this embodiment as discussed above, a quantization matrix is generated based on the input code data according to the corresponding matrix generation type and used in dequantization, whereby the number of encoded bits of the quantization matrix can be reduced.

A function of each part described above can be realized by a program stored in a computer.

In the above embodiments, video encoding is explained. However, the present invention can be applied to still image encoding.

According to the present invention, a plurality of quantization matrixes are generated using one or more of parameters such as an index of generation function for generating a quantization matrix, a change degree indicating a degree of change of a quantization matrix, a distortion degree and a correction item. Quantization and dequantization are performed using the quantization matrix. The optimum set of quantization matrix generation parameter is encoded and transmitted. As a result, the present invention can realize an encoding efficiency higher than the conventional quantization matrix transmission method.

According to the present invention, there is provided a video encoding/decoding method and apparatus making it possible to improve the encoding efficiency in the low bit rate can be made a realizing possible.

Industrial Applicability

The invention can applied to encoding and decoding of a motion picture, a still picture, an audio, etc. over each field such as video, audio devices, mobile equipment, broadcast, information terminals, or network.

**Claims**

1. A video encoding method of quantizing transform coefficient using a quantization matrix, the video encoding method comprising:

   a step of generating a quantization matrix using a generation function concerning generation of the quantization matrix and a generation parameter;
   a step of quantizing a transform coefficient concerning an input image signal using the quantization matrix to generate a quantized transform coefficient; and
a step of encoding the generation parameter and the quantized transform coefficient to generate a code signal.

2. The video encoding method according to claim 1, wherein the encoding step encodes the quantized transform coefficient and the parameter by multiplexing them.

3. The video encoding method according to claim 1, further comprising a quantization matrix generation parameter setting step of setting the generation parameter according to an image situation of the input image signal to be encoded or an encoding situation.

4. The video encoding method according to claim 1, wherein the quantization matrix setting step includes a step of setting a plurality of generation parameters according to image situation or encoding situation to generate a plurality of quantization matrixes for one encoded image.

5. The video encoding method according to claim 1 or 2, wherein the quantization matrix generating step includes a step of creating a plurality of generation functions for generating the quantization matrix.

6. The video encoding method according to claim 1 or 2, wherein the quantization matrix generating step generates the quantization matrix, using the generation parameter of quantization matrix including at least one or more of an index of the function for the quantization matrix, a change degree indicating a degree of change of the quantization matrix, a distortion degree and a correction item.

7. The video encoding method according to claim 1 or 2, wherein generating the quantization matrix generates the quantization matrix using the quantization matrix generation parameter corresponding to the generation function defined by using any one of a sine function, a cosine function, an N-dimensional function, a sigmoid function and a Gaussian function.

8. The video encoding method according to claim 1 or 2, wherein the quantization matrix generating step includes a step of changing function operation precision when the quantization matrix is generated in correspondence with an index of the generation function corresponding to the selected generation parameter.

9. The video encoding method according to claim 1 or 2, wherein the quantization matrix generating step includes a step of recording a calculation process performed for generating the quantization matrix on a table beforehand, and a step of generating the quantization matrix by calling the calculation process recorded on the table in correspondence with the index of generation function.

10. The video encoding method according to claim 1 or 2, wherein the encoding step includes a step of multiplexing at least one or more of an index of the function, a change degree indicating a degree of change of the quantization matrix, a distortion degree and a correction item with a syntax with respect to the generation parameter.

11. The video encoding method according to claim 1 or 2, further comprising a dequantizing step of dequantizing the quantized transform coefficient using the quantization matrix.

12. A video encoding method according to claim 1 or 2, wherein the quantization matrix generating step includes a step of allowing switching of use of the quantization matrix generated by the quantization matrix generation step and nonuse of the quantization matrix at the time of quantization.

13. The video encoding method according to claim 1 or 2, wherein the encoding step includes a step of adaptively switching, when a set of a plurality of parameters used for generation of a plurality of quantization matrixes is set, between multiplexing of the generation parameter set of the quantization matrix with the syntax and non-multiplexing.

14. The video encoding method according to claim 1 or 2, wherein the encoding step includes a step of changing the quantization matrix generated using the parameter every encoding sequence, every picture or every encoding slice, when the quantization matrix is used at the time of quantizing.

15. The video encoding method according to claim 1 or 2, wherein the quantizing step includes a step of changing the quantization matrix according to a large or small value of a quantization scale of a macroblock.

**16.** The video encoding method according to claim 1 or 2, wherein the quantizing step includes a step of changing the quantization matrix according to whether a resolution of the input image signal is higher or lower than a given value.

**17.** A video decoding method of performing dequantization of a transfer coefficient using a quantization matrix corresponding to each frequency position of the transform coefficient, the video decoding method comprising:

a decoding step of decoding an input code signal including a generation parameter used for generating a quantization matrix;
a quantization matrix generation step of generating a quantization matrix based on a decoded parameter;
a dequantizing step of dequantizing a decoded transform coefficient, using the quantization matrix generated by the quantization matrix generation step; and
a decoded image generation step of generating a decoded image based on the transform coefficient obtained by the dequantization step.

**18.** A video decoding method of performing dequantization of a transform coefficient using a quantization matrix, the video decoding method comprising:

a decoding step of decoding an input code signal including a generation parameter used for generating a quantization matrix;
a quantization matrix generation step of generating a generation parameter for a different quantization matrix based on a situation of a decoded generation parameter, generating a quantization matrix according to a generation mode of the generation parameter for the different quantization matrix, and updating it at appropriate timing,
a dequantization step of quantizing a decoded transform coefficient, using the quantization matrix generated by the quantization matrix generation step, and
a decoded image generation step of generating a decoded image based on a transform coefficient obtained by the quantization step.

**19.** The video decoding method according to claim 17 or 18, wherein the quantization matrix generating step includes setting a set of plural generation parameters at plural quantization matrixes generated for one encoded image.

**20.** The video decoding method according to claim 17 or 18, wherein the quantization matrix generating step includes a step of creating a plurality of functions used for generating the quantization matrix.

**21.** The video decoding method according to claim 17 or 18, wherein the quantization matrix generating step includes a step of generating the quantization matrix based on the decoded quantization matrix generation parameter, using at least one or more of an index of a function of the quantization matrix, a change degree indicating a degree of change of the quantization matrix, a distortion degree and a correction item.

**22.** The video decoding method according to claim 17 or 18, wherein the quantization matrix generating step includes a step of generating the quantization matrix, using a function for generating the quantization matrix, the function being defined by using any one of a sine function, a cosine function, an N-dimensional function, a sigmoid function and a Gaussian function.

**23.** The video decoding method according to claim 17 or 18, wherein the quantization matrix generating step includes a step of changing a generation function operation precision at which the quantization matrix is generated, according to an index of the generation function, which corresponds to a generation parameter of the selected quantization matrix.

**24.** The video decoding method according to claim 17 or 18, wherein the quantization matrix generating step includes a step of recording a calculation process necessary for generating the quantization matrix on a corresponding table in advance, and a step of calling the calculation process from the table according to an index of a generation function to generate the quantization matrix.

**25.** The video decoding method according to claim 17 or 18, wherein the quantization matrix generating step includes a step of generating the quantization matrix based on the generation parameter of a decoded quantization matrix, using at least one or more quantization matrix generation manners.

26. The video decoding method according to claim 17 or 18, wherein the quantization matrix generating step includes a step of generating the quantization matrix by substituting an available generation function when a generation function corresponding to a generation function index within the generation parameter of a decoded quantization matrix is unable to be used at the time of decoding.

27. The video decoding method according to claim 17 or 18, wherein the dequantizing step includes a step of adaptively changing between use of the quantization matrix generated by the generation parameter of the quantization matrix and nonuse thereof when a decoded quantization matrix is used in dequantization.

28. The video decoding method according to claim 17 or 18, wherein the decoding step includes steps of using the generation parameter of the quantization matrix as a supplemental syntax by decoding and dequantizing it when the plural quantization matrixes are usable for decoding in the quantization step, and dequantizing it using a quantization matrix prescribed beforehand when the supplemental syntax is unable to be used.

29. The video decoding method according to claim 17 or 18, wherein the dequantizing step includes a step of changing the quantization matrix generated using the generation parameter of the quantization matrix, every encoding sequence, every picture or every encoding slice, when the quantization matrix generated by the quantization generation step is used at the time of dequantizing.

30. The video decoding method according to claim 17 or 18, wherein the dequantizing step includes a step of changing the quantization matrix generated by the quantization matrix generation step, according to whether a value of a quantization scale of a macroblock is larger or smaller than a given value.

31. The video decoding method according to claim 17 or 18, wherein the dequantizing step includes a step of changing the quantization matrix generated by the quantization matrix generation step, according to whether a resolution of an input image signal is higer or lower than a given value.

32. A video encoding apparatus of quantizing a transform coefficient using a quantization matrix, the video encoding apparatus comprising:

a quantization matrix generator to generate a quantization matrix using a generation function concerning generation of the quantization matrix and a generation parameter;
a quantizer to quantize a transform coefficient relating to an input image signal using the quantization matrix to generate a quantized transform coefficient; and
an encoder to encode the generation parameter and the quantized transform coefficient to generate a code signal.

33. In a video decoding apparatus of performing dequantization of a transform coefficient using a quantization matrix, the video decoding apparatus comprising:

a decoder to decode an input code signal including a generation parameter used for generating a quantization matrix;
a quantization matrix generator to generate the quantization matrix based on a decoded generation parameter;
a dequantizer to dequantize a decoded transform coefficient, using the quantization matrix generated by the quantization matrix generation step; and
a decoded image generator to generate a decoded image based on the transform coefficient obtained by the dequantizer.

34. A video encoding program for causing a computer to encode a video image by including a process of quantizing a transform coefficient using a quantization matrix, the program including:

an instruction for instructing the computer to generate a quantization matrix using a generation function concerning generation of the quantization matrix and a generation parameter;
an instruction for instructing the computer to quantize a transform coefficient relating to an input image signal using the generated quantization matrix to generate a quantization coefficient; and
an instruction for instructing the computer to encode the generation parameter and the quantized transform coefficient to generate a code signal.

35. A video encoding program for causing a computer to decode a video image by including a process of dequantizing a transform coefficient using a quantization matrix, the program including:

an instruction for instructing the computer to decode an input code signal including a generatio0n parameter used for generating a quantization matrix;
an instruction for instructing the computer to generate the quantization matrix based on a decoded parameter;
an instruction for instructing the computer to dequantize a decoded transform coefficient using the quantization matrix generated; and
an instruction for instructing the computer to generate a decoded image based on a transform coefficient obtained by the dequantizing.

110

Encoding controller

108 — Parameter generator

117 Quantization matrix generation parameter

116 Input image signal

109 — Quantization matrix generator

114 Quantization matrix

119 Prediction error signal

101    102

Predictor → Mode decision unit → Transformer → Quantizer

104

111

120

Encoding processor → Output buffer

107

118 Predictive image signal

106

103

105

112 Transform coefficient

115 Code data

Reference memory ← Inverse transformer ← Dequantizer

113 Local decoded image signal

100

F I G. 1

210

Quantization matrix generation controller

205
Quantization
matrix
generation
parameter

201

Generated
parameter
deciphering
unit

202

203
1st matrix
generator

2nd matrix
generator

N-th matrix
generator

204
Quantized
matrix

109

F I G. 2

FIG.3

Encoded frame

Encoded blocks

To-be-encoded block

F I G. 4A

16 pixels

16 pixels

F I G. 4B

4 pixels

4 pixels

F I G. 4C

8 pixels

8 pixels

F I G. 4D

$$Q_{4 \times 4}(i, j) = \begin{bmatrix} 6 & 12 & 20 & 27 \\ 12 & 20 & 27 & 32 \\ 20 & 27 & 32 & 37 \\ 27 & 32 & 37 & 41 \end{bmatrix}$$

F I G. 5A

$$Q_{8 \times 8}(i, j) = \begin{bmatrix} 9 & 13 & 15 & 17 & 19 & 21 & 22 & 24 \\ 13 & 13 & 17 & 19 & 21 & 22 & 24 & 25 \\ 15 & 17 & 19 & 21 & 22 & 24 & 25 & 27 \\ 17 & 19 & 21 & 22 & 24 & 25 & 27 & 28 \\ 19 & 21 & 22 & 24 & 25 & 27 & 28 & 30 \\ 21 & 22 & 24 & 25 & 27 & 28 & 30 & 32 \\ 22 & 24 & 25 & 27 & 28 & 30 & 32 & 33 \\ 24 & 25 & 27 & 28 & 30 & 32 & 33 & 35 \end{bmatrix}$$

F I G. 5B

Value of quantization matrix

$Z = a*r + c$

Gradient of variation (A)

Correction (C)

Frequency position   r

F I G. 6A

$Z = b \times \sin(\pi r/2)$

Frequency position   r

Amplitude of distortion (B)

F I G. 6B

Value of quantization matrix

Rate of variation (A)

$Z = a*r*r + b*r + c$

Correction (C)

F I G. 6C   −b/a   Frequency position   r

Syntax structure ┄┄┄► Supplemental syntax ⌐410

High level syntax ⌐401
→ Sequence parameter set syntax ⌐404
→ Picture parameter set syntax ⌐405

Slice level syntax ⌐402
→ Slice header syntax ⌐406
→ Slice data syntax ⌐407

Macroblock level syntax ⌐403
→ Macroblock header syntax ⌐408
→ Macroblock data syntax ⌐409

F I G. 7

```
seq_parameter_set(){
    . . .
        ex_seq_scaling_matrix_flag
        if(ex_seq_scaling_matrix_flag){
            ex_matrix_A
            ex_matrix_B
            ex_matrix_C
        }
    . . .
}
```

F I G. 8

```
pic_parameter_set(){
    . . .
        ex_pic_scaling_matrix_flag
        if(ex_pic_scaling_matrix_flag){
            ex_matrix_type
            ex_matrix_A
            ex_matrix_B
            ex_matrix_C
        }
    . . .
}
```

F I G. 9

```
pic_parameter_set(){
    . . .
        ex_pic_scaling_matrix_flag
        if(ex_pic_scaling_matrix_flag){
            ex_num_of_matrix_type
            for(i=0;i< ex_num_of_matrix_type;i++){
                ex_matrix_type[i]
                ex_matrix_A[i]
                ex_matrix_B[i]
                ex_matrix_C[i]
            }
        }
        . . .
}
```

F I G. 10

```
Supplemental_header(){
    . . .
      ex_sei_scaling_matrix_flag
      if(ex_sei_scaling_matrix_flag){
          ex_num_of_matrix_type
          for(i=0;i< ex_num_of_matrix_type;i++){
              ex_matrix_type[i]
              ex_matrix_A[i]
              ex_matrix_B[i]
              ex_matrix_C[i]
          }
      }
    . . .
}
```

F I G. 11

Multipass process flow

```
        ┌──────────┐
        │  Start   │
        └──────────┘
             │
             ▼
  ┌────────────────────────┐
  │     Read one frame     │───S101
  └────────────────────────┘
             │
             ▼
  ┌────────────────────────┐
  │    PGM_idx = 0         │───S102
  │    min_costQ = ∞       │
  └────────────────────────┘
             │
             ▼
  ┌────────────────────────────┐
  │ Selectively set quantization│───S103
  │ matrix generation parameter set│
  └────────────────────────────┘
             │
             ▼
  ┌────────────────────────┐
  │    Encode one frame    │───S104
  └────────────────────────┘
             │
             ▼
  ┌────────────────────────┐
  │ Accumulate encoded costs│───S105
  └────────────────────────┘
             │
             ▼         S106
        ◇ cost<min_costQ? ◇
          No │        │ Yes
             ▼
  ┌────────────────────────┐
  │ Best_PGM_idx = PGM_idx │───S107
  │ min_costQ = cost       │
  └────────────────────────┘
             │
             ▼         S108
        ◇ PQM_idx++      ◇
        ◇ PQM_idx > MAX? ◇
          No │        │ Yes
             ▼
        To step S002
```

F I G. 12

```
Slice_header(){
    . . .
    slice_ex_scaling_matrix_flag
    if(slice_ex_scaling_matrix_flag){
        for(j=0;j<NumOfMatrix;j++){
            slice_ex_matrix_type[j]
            slice_ex_matrix_A[i]
            slice_ex_matrix_B[i]
            slice_ex_matrix_C[i]
        }
    }
    . . .
}
```

F I G. 13

```
Slice_header(){
    . . .
    slice_ex_scaling_matrix_flag
    if(slice_ex_scaling_matrix_flag){
        for(j=0;j<NumOfMatrix;j++){
            slice_ex_matrix_type[j]
            slice_ex_matrix_A[i]
            slice_ex_matrix_B[i]

        }
    }
    . . .
}
```

F I G. 14

```
Slice_header(){
    . . .
        slice_ex_scaling_matrix_flag
        if(slice_ex_scaling_matrix_flag){
            for(j=0;j<NumOfMatrix;j++){
                slice_ex_matrix_type[j]
                slice_ex_matrix_A[i]
                slice_ex_matrix_B[i]
                slice_ex_matrix_C[i]
            }
        }else{
            for(j=0;j<NumOfMatrix;j++){
                PrevSliceExMatrixType[CurrSliceType] [j]
                PrevSliceExMatrix_A[CurrSliceType] [i]
                PrevSliceExMatrix_B[CurrSliceType] [i]
                PrevSliceExMatrix_C[CurrSliceType] [i]

            }
        }
    . . .
}
```

F I G. 15

| Slice type | Value of CurrSlice Type |
|---|---|
| I-Slice (Slice for only intra-picture prediction) | 0 |
| P-Slice (Slice applicable to unidirectional picture prediction) | 1 |
| B-Slice (Slice applicable to bidirectional picture prediction) | 2 |

F I G. 16

```
Slice_header(){
    . . .
        slice_ex_scaling_matrix_flag
        if(slice_ex_scaling_matrix_flag){
                slice_ex_matrix_type
                slice_ex_matrix_A
                slice_ex_matrix_B
                slice_ex_matrix_C
        }else{
                PrevSliceExMatrixType[CurrSliceType]
                PrevSliceExMatrix_A[CurrSliceType]
                PrevSliceExMatrix_B[CurrSliceType]
                PrevSliceExMatrix_C[CurrSliceType]

        }
    . . .
}
```

F I G. 17

F I G. 18

```
                        ┌──────────┐
                        │  Start   │
                        └────┬─────┘
                             │
              ┌──────────────▼──────────────┐
              │      Read one frame         │── S201
              └──────────────┬──────────────┘
                             │
              ┌──────────────▼──────────────┐
              │          Decode             │── S202
              └──────────────┬──────────────┘
                             │            S203
                        ╱────▼────╲
        No         ╱        Is         ╲
   ┌──────────────     quantization matrix    
   │           ╲        used?       ╱
   │                ╲────┬────╱
   │                     │ Yes
   │      ┌──────────────▼──────────────┐
   │      │   Set generation parameter  │── S204
   │      └──────────────┬──────────────┘
   │                     │
   │      ┌──────────────▼──────────────┐
   │      │  Generate quantization matrix│── S205
   │      └──────────────┬──────────────┘
   └─────────────────────┤
          ┌──────────────▼──────────────┐
          │         Dequantize          │── S206
          └──────────────┬──────────────┘
                         │
          ┌──────────────▼──────────────┐
          │      Inverse-transform      │── S207
          └──────────────┬──────────────┘
                         │
          ┌──────────────▼──────────────┐
          │    Generate predictive image│── S208
          └──────────────┬──────────────┘
                         │
       ┌─────────────────▼─────────────────┐
       │ Prediction error + predictive image│── S209
       └─────────────────┬─────────────────┘
                         │
          ┌──────────────▼──────────────┐
          │     Output decoded signal   │── S210
          └──────────────┬──────────────┘
                         │
                    ┌────▼─────┐
                    │   End    │
                    └──────────┘
```

F I G. 19

## INTERNATIONAL SEARCH REPORT

| | International application No. |
|---|---|
| | PCT/JP2006/320875 |

**A. CLASSIFICATION OF SUBJECT MATTER**
*H04N7/30(2006.01)i*

According to International Patent Classification (IPC) or to both national classification and IPC

**B. FIELDS SEARCHED**

Minimum documentation searched (classification system followed by classification symbols)
H04N7/26-7/68, H04N1/41

Documentation searched other than minimum documentation to the extent that such documents are included in the fields searched
Jitsuyo Shinan Koho          1922-1996   Jitsuyo Shinan Toroku Koho   1996-2007
Kokai Jitsuyo Shinan Koho    1971-2007   Toroku Jitsuyo Shinan Koho   1994-2007

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br><br><br>A | JP 2003-46789 A  (Canon Inc.),<br>14 February, 2003 (14.02.03),<br>Par. Nos. [0023], [0042], [0060] to [0061],<br>[0076], [0081]; all drawings<br>& US 2003/0031371 A1 | 1-4,11-12,<br>14,17-19,25,<br>27-29,32-35<br>5-10,13,<br>15-16,20-24,<br>26,30-31 |
| A | JP 2003-189308 A  (Victor Company Of Japan,<br>Ltd.),<br>04 July, 2003 (04.07.03),<br>Full text; all drawings<br>(Family: none) | 1-35 |
| A | JP 2000-324494 A  (NEC Corp.),<br>24 November, 2000 (24.11.00),<br>Full text; all drawings<br>& US 6509929 B1          & GB 2352578 A | 1-35 |

| ☒ | Further documents are listed in the continuation of Box C. | ☐ | See patent family annex. |
|---|---|---|---|

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 12 January, 2007 (12.01.07) | 23 January, 2007 (23.01.07) |

| Name and mailing address of the ISA/ | Authorized officer |
|---|---|
| Japanese Patent Office | |
| Facsimile No. | Telephone No. |

Form PCT/ISA/210 (second sheet) (April 2005)

**INTERNATIONAL SEARCH REPORT**

International application No.

PCT/JP2006/320875

C (Continuation).   DOCUMENTS CONSIDERED TO BE RELEVANT

| Category* | Citation of document, with indication, where appropriate, of the relevant passages | Relevant to claim No. |
|---|---|---|
| A | JP 10-150659 A  (Sony Corp.),<br>02 June, 1998 (02.06.98),<br>Full text; all drawings<br>(Family: none) | 1-35 |
| A | JP 11-252551 A  (Kabushiki Kaisha ATR Adaptive<br>Communications Research Laboratories),<br>17 September, 1999 (17.09.99),<br>Full text; all drawings<br>(Family: none) | 1-35 |
| A | Joint Video Team (JVT) of ISO/IEC MPEG & ITU-T<br>VCEG (ISO/IECJTC1/SC29/WG11 and ITU-T SG16 Q.6),<br>Proposal of quantization weighting for H.264/<br>MPEG-4 AVC Professional Profiles, JVT-K029,<br>2004.03, p.1-p.8 | 1-35 |

Form PCT/ISA/210 (continuation of second sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003189308 A

**Non-patent literature cited in the description**

- **W. H. CHEN ; C. H. SMITH.** Adaptive Coding of Monochrome and Color Images. *IEEE Trans. On Comm.,* November 1977, vol. 25 (11

- **JIUHUAI LU.** Proposal of quantization weighting for H.264/MPEG-4 AVC Professional Profiles. *JVT of ISO/IEC MPEG & ITU-T VCEG, JVT-K029,* March 2004